(19) Europäisches Patentamt

European Patent Office

Office européen des brevets

(11) Publication number: **0 407 688 A2**

## EUROPEAN PATENT APPLICATION

(21) Application number: 90104665.6

(22) Date of filing: 12.03.90

(51) Int. Cl.⁵: **A43B 10/00**

(30) Priority: 13.03.89 IT 4154489

(43) Date of publication of application:
16.01.91 Bulletin 91/03

(84) Designated Contracting States:
DE DK ES FR GB

(71) Applicant: SPORTIME S.P.A.
Via Toniolo 13
I-31030 Caselle di Altivole (Treviso)(IT)

(72) Inventor: Franco, Giorgio
Via Monte Antelao
I-31044 Montebelluna, (Treviso)(IT)

(74) Representative: Modiano, Guido et al
MODIANO, JOSIF, PISANTY & STAUB
Modiano & Associati Via Meravigli, 16 16 16
I-20123 Milano(IT)

(54) Method and mold for the manufacture of footwear.

㊲ This method for the manufacture of footwear is of the kind in which the sole is associated with an upper by injection, with the upper fitted on a last and locked by half-rings inside the mold. The method comprises a first step in which first elements, made of a desired material, are molded on the upper by injecting the material in a pair of auxiliary half-rings suitably shaped and upwardly closed by the upper. Once the auxiliary half-rings are open, the upper with the first elements is locked by and upwardly closes a pair of main half-rings, while a tread sole is ready in the lower part of the mold cavity so as to allow injection of a mid-sole.

# METHOD AND MOLD FOR THE MANUFACTURE OF FOOTWEAR

The present invention relates to a method and to a mold for the manufacture of footwear, in particular of the type with multiple-color and/or multiple-material soles and mid-soles.

According to currently widely employed technologies, during the manufacture of footwear obtained by "injection on the upper", a tread sole is made either directly in a first section of a mold by injection-molding it in the same machine station or separately, and is then inserted in the mold of that station.

After this operation, a last bearing an upper is inserted in the same mold section over the tread sole and a mid-sole is injected, providing the connection between the sole and the upper; said mid-sole must extend along the entire extension of the sole in order to obtain the required coupling.

According to this technique, it is not possible to create reinforcement or aesthetic elements which are rigidly associated with the upper, have an extension which is smaller than that of the entire item of footwear and/or are of a material which is different from the material of the connecting mid-sole.

Therefore, when these elements are desired, they should be pre-fitted on the upper, but this entails very high production costs.

The aim of the present invention is to provide a method which allows a footwear having elements associated with the upper to be manufactured with a sequence of operations to be carried out in a single machine station.

A further object is to provide a method allowing said elements associated with the upper to affect even just some regions of said upper and not the entire extension of the sole.

Another object is to provide a method allowing said elements to be made of injectable plastic material with characteristics which differ from those of the mid-sole and are chosen according to desired mechanical or aesthetic reasons.

Still another object is to provide a simple mold which allows to perform the method.

Not least object is to provide a mold which can be fitted on conventional machines without particular modifications or adaptations.

This aim, these objects and others which will become apparent hereinafter are achieved by a method for the manufacture of footwear, as defined in claim 1.

The invention further regards a mold for carrying out such method, as defined in claim 5.

The characteristics and advantages of the invention will become apparent from the detailed description of a preferred embodiment, given by way of non-limitative example and illustrated in the accompanying drawings, wherein:

figure 1 is a transverse sectional view of the assembly of the mold and of the half-rings, with the auxiliary half-rings closed to perform a first injection;

figure 2 is a longitudinal sectional view of the configuration of figure 1;

figure 3 is a transverse sectional view during the second injection operation, with open auxiliary half-rings and upper closed in the main half-rings;

figure 4 is a longitudinal sectional view of the configuration of figure 3.

With reference to the above figures, the method according to the invention is performed in a machine of the kind which is commonly used for injection on the upper.

In the illustrated case, said machine must be provided with two injectors which are not illustrated in the figures.

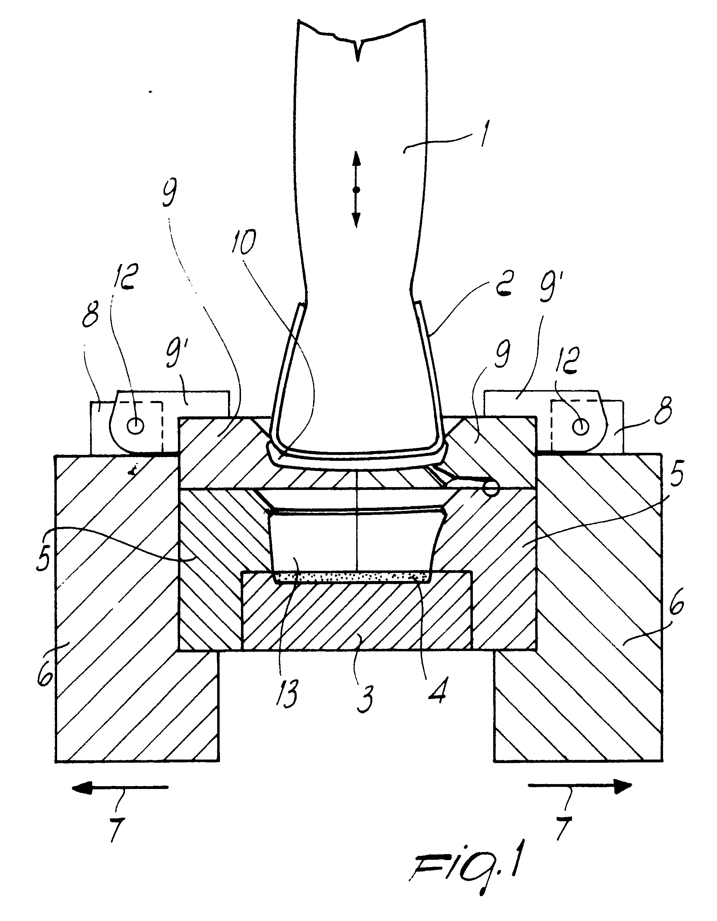

The injection station has, as can be seen in figure 1, a last 1 on which an upper 2 is fitted; said last is supported by a last rotation head, not indicated, in which a movement along the vertical axis is provided.

The structure of the mold is composed of a lower mold section 3 in which a tread sole 4 is formed or inserted.

Main half-rings 5 co-operate with said lower mold section 3 and are rigid with a lateral support and movement structure 6 which, as is usual in this kind of method, is provided with movement means which allow to open the main half-rings 5 by translation according to the arrows 7. In particular, as usual, the main half-rings 5 are shaped so as to define a cavity 13 counter-shaped to the side and lower outline of the mid-sole.

Two auxiliary half-rings 9 are hinged upward on the structure 6 of the main half-rings 5 by means of tabs 8 protruding upwardly from the structure 6 and hingedly connected, at the pivoting axes 12, to small blocks 9' rigid with the ends of the auxiliary half rings 9; in the first injection step, said auxiliary half-rings are positioned as in figure 1 so as to superimpose and matchingly fit the upper face of the main half-rings.

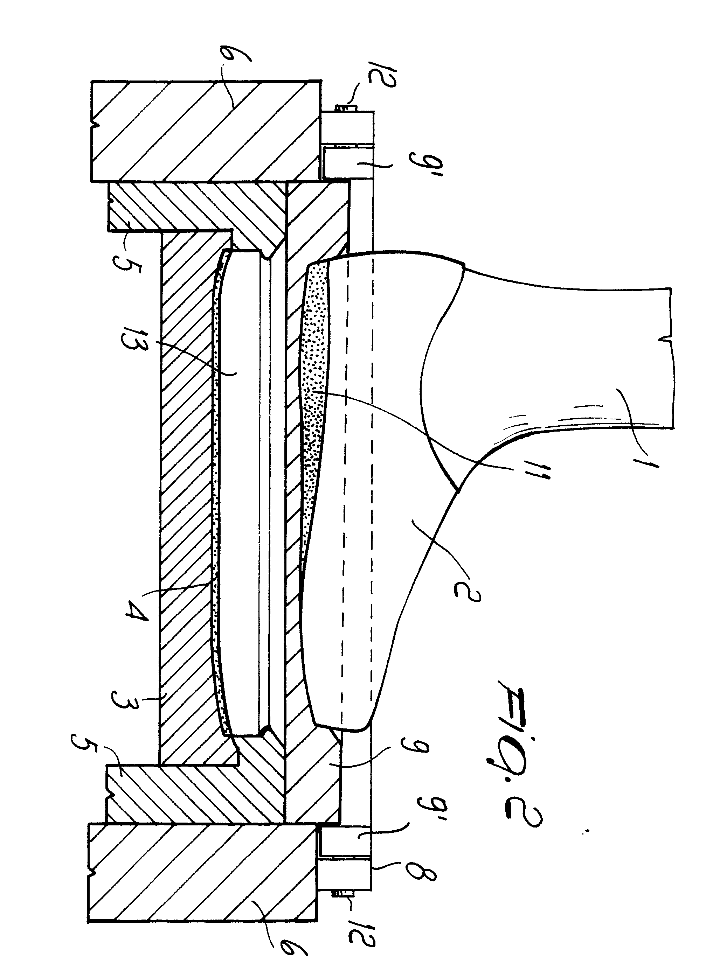

The half-rings 9 are upwardly shaped so as to define the side and lower outline of a desired insert so that, in the closed position shown in figures 1 and 2, they define, together with the upper 2, a cavity 10 which corresponds to the desired insert 11 (see figure 2) which, in the shown embodiment, only partially affects the extension of the entire sole of the item of footwear.

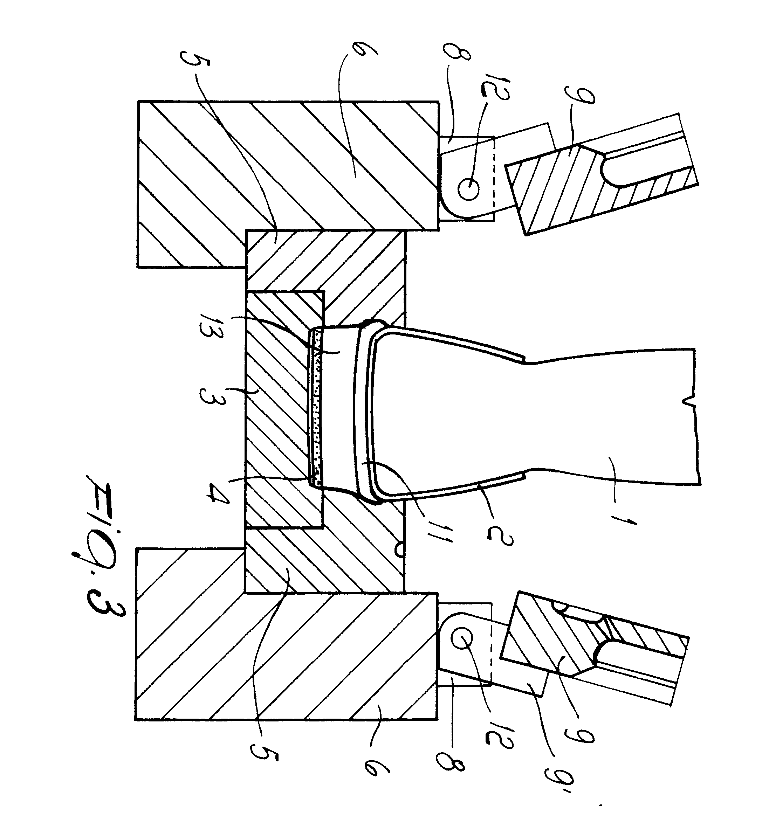

The auxiliary half-rings 9 controllably rotate about the pivoting axes 12 and thus, at the end of the first injection step, can move to the condition of figure 3 in which they do not affect the cavity 13 which is formed between the main half-rings 5.

By means of a structure of this kind it is possible to provide the claimed innovative method, which consists in arranging the upper 2, fitted on the last 1, first within the auxiliary half-rings 9 so as to upwardly close the cavity 10, thus forming, in the illustrated case, the insert 11, or any kind of reinforcement element or of aesthetic element associated with the upper.

In this first step, the forces which develop on the auxiliary half-rings 9 are discharged onto the main half-rings 5 and thus onto the structure of the machine.

After this first operation, the structure 6 with the main and auxiliary half-rings 5,9 widen, moving according to the arrows 7, and when the upper 2 has been released, the auxiliary half-rings 9 rotate angularly until they assume the position indicated in figure 3.

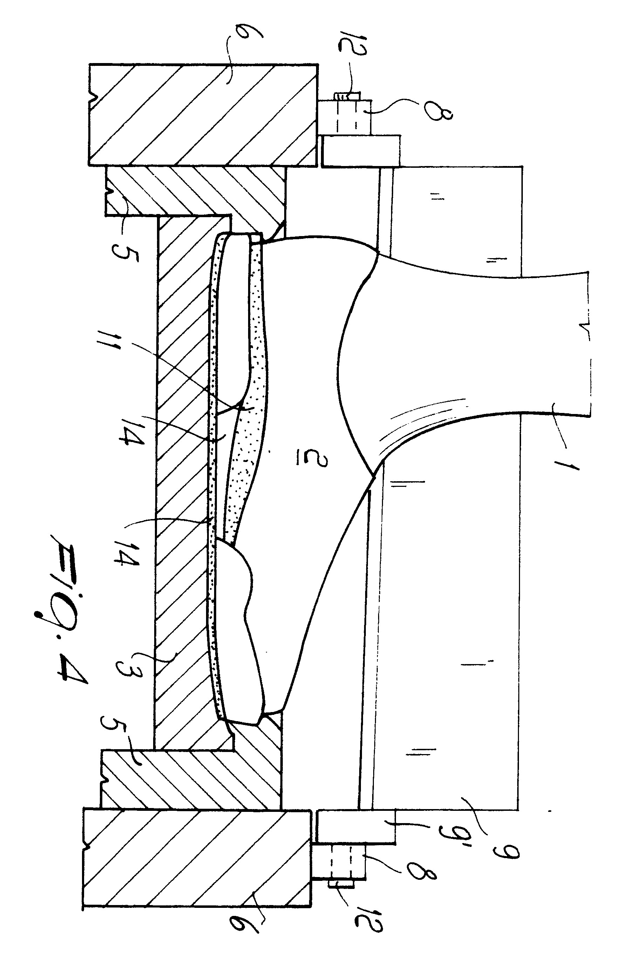

At this point the last 1, with the upper 2 and the insert 11 (the element 11 is termed "insert" since it will be inserted in the finished item of footwear between the mid-sole and the upper), lowers until it enters between the main half-rings 5, which close, forming a new cavity 13 where a second product is injected, generating a mid-sole 14 (figure 4) which affects the entire extension of the sole of the item of footwear and provides the connection to the tread sole 4.

It is thus possible to have, in the finished footwear, above the mid-sole, regions of a material differing in mechanical characteristics or in aesthetic characteristics or in both.

It is thus possible to provide protected regions, more rigid regions or regions with different colors without said regions having to necessarily affect the entire extension of the sole and without said regions constituting the connecting element between the upper and the tread sole.

As can be seen, despite the modification which allows to obtain an original and new method as well as a new finished product, the mold is compatible with current machines which perform injection on the upper.

The auxiliary half-rings mounted above the main half-rings are controlled by manual, pneumatic or hydraulic means so as to move from the operating condition shown in figures and 2 to the idle condition shown in figures 3 and 4 which allows to operate with the main half-rings.

From the conceptual point of view, further pairs of auxiliary half-rings, each pivoted above the immediately underlying pair of half-rings, could be mounted above said auxiliary half-rings in order to multiply the operative steps and allow further successive injections of different materials.

The method allows to obtain an item of footwear with very interesting characteristics, automating an operation of glueing aesthetic or protective elements on the upper which would be excessively onerous from the economical point of view.

From what has been described, it can thus be seen that the intended aim and objects have all been achieved, providing a method which is very advantageous and economically valid.

The shape and dimensions of the mold and of its elements may obviously be any according to the requirements and to the kind of footwear to be manufactured.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for manufacturing footwear of the "injection on the upper" kind, characterized in that it comprises the following operating steps:

    a) closing a pre-assembled upper fitted on a last within a pair of auxiliary half-rings which define, together with the upper, at least one cavity, injection-filling the cavity with a first material to form elements rigidly associated with the upper;

    b) opening the auxiliary half-rings, lowering the last down to a pair of main half-rings which co-operate with a mold section accommodating a tread sole so as to define a further cavity;

    c) injecting materials into the further cavity to form a connecting mid-sole.

2. A method according to claim 1, characterized in that during step a) the auxiliary half-rings are superimposed on the main half-rings, defining, on the upper fitted on the last, local cavities which do not necessarily affect the entire extension of the sole, a first thermoplastic product, with desired mechanical and/or aesthetic characteristics, being injected into the local cavities.

3. A method according to claim 1, characterized in that the opening of the auxiliary half-rings occurs by rotation about a pivoting axis, after the auxiliary half-rings have moved, spacing themselves from one another and releasing the last.

4. A method according to claim 1, characterized in that after the auxiliary half-rings have opened, the last which bears the upper descends until it locates itself between the main half-rings, between which it is locked, defining, together with the mold section which bears the tread sole, the further cavity the extension whereof is the entire extension of the sole, a further material, which defines the connecting mid-sole, being injected into the further cavity.

5. A mold for carrying out the method of claim 1, characterized by a mold section (3) accommodating a tread sole (4), a pair of main half-rings (5) arranged above said mold section and being movable away from each other, at least a pair of auxiliary half-rings (9) arranged on said main half-rings and being movable between a first position superimposed horizontally on said main half-rings and a second position away from said main half-rings, a vertically translating last (1) for supporting an upper (2) cooperating, in successive steps, on said different pairs of half-rings.

6. A mold according to claim 5, characterized in that said auxiliary half-rings (9) are mounted, by pivoting about horizontal axis (12), on said main half-rings (5) which are movable by a horizontal translation (7) causing mutual spacing thereof.

7. A mold according to claim 5, characterized in that the angular rotation of said auxiliary half-rings (9) determines a position thereof which does not prevent the operativity of the main half-rings and the movement of the last which bears the upper.

8. A mold according to claim 5, characterized by a plurality of pairs of auxiliary half-rings (9), each pair being pivoted on an underlying pair of auxiliary half-rings (9), the lower pairs of auxiliary half-rings being pivoted on the main half-rings (5).

Fig.1

Fig. 2

Fig.3

Fig.4